# EUROPÄISCHE PATENTSCHRIFT

(11) **EP 2 457 931 B1**
(45) Veröffentlichungstag und Bekanntmachung des Hinweises auf die Patenterteilung: **22.10.2014**
(21) Anmeldenummer: 11010097.1
(22) Anmeldetag: 26.03.2010
(51) Int. Cl.: C08F 20/28, C08F 120/28, C08F 220/28, B01D 19/04, C10G 33/04

(54) **Alkoxylierte (Meth)acrylat-Polymere und ihre Verwendung als Rohölemulsionsspalter**
Alkoxylated (meth)acrylate polymers and use of same as crude oil emulsion splitting agent
Polymères de (méth)acrylate alkoxylés et leur utilisation en tant que désémulsifiants de pétrole brut

(30) Priorität: 28.04.2009 DE 102009019179
(43) Veröffentlichungstag der Anmeldung: 30.05.2012
(62) Teilanmeldung aus: 10711346.6
(73) Patentinhaber: Clariant Finance (BVI) Limited, Road Town, Tortola (VG)
(72) Erfinder: Schaefer, Carsten, Dr., 84453 Mühldorf (DE); Cohrs, Carsten, Dr., 60316 Frankfurt (DE); Dilsky, Stefan, Dr., 97218 Gerbrunn (DE)
(74) Vertreter: Mikulecky, Klaus

(56) Entgegenhaltungen:
- CN-A- 1 803 994
- US-A1- 2007 032 620

## Beschreibung

Die vorliegende Erfindung betrifft alkoxylierte (Meth)acrylat-Polymere und ihre Verwendung zur Spaltung von Wasser-Öl-Emulsionen, insbesondere in der Rohölgewinnung.

Rohöl fällt bei seiner Förderung als Emulsion mit Wasser an. Vor der Weiterverarbeitung des Rohöls müssen diese Rohölemulsionen in den Öl- und den Wasseranteil gespalten werden. Hierzu bedient man sich im Allgemeinen sogenannter Rohöl- oder Erdölemulsionsspalter, oder auch kurz "Erdölspalter" genannt. Es handelt sich bei Erdölspaltern um grenzflächenaktive polymere Verbindungen, die in der Lage sind, innerhalb kurzer Zeit die erforderliche Trennung der Emulsionsbestandteile zu bewirken.

Als Demulgatoren kommen hauptsächlich alkoxylierte Alkylphenol-FormaldehydHarze, nichtionische Alkylenoxid-Blockcopolymere sowie mit Bisepoxiden vernetzte Varianten zum Einsatz. Übersichten liefern "Something Old, Something New: A Discussion about Demulsifiers", T. G. Balson, Seiten 226-238 in Proceedings in the Chemistry in the Oil Industry VIII Symposium, 03. - 05.11.2003, Manchester, GB, sowie "Crude-Oil Emulsions: A State-Of-The-Art Review", S. Kokal, Seiten 5-13, Society of Petroleum Engineers SPE 77497.

US-4 032 514 offenbart die Verwendung von Alkylphenol-Aldehydharzen zur Spaltung von Erdölemulsionen. Diese Harze sind aus der Kondensation eines para-Alkylphenols mit einem Aldehyd, meistens Formaldehyd, erhältlich.

Solche Harze werden oft in alkoxylierter Form verwendet, wie es beispielsweise in DE-A-24 45 873 offenbart ist. Hierzu werden die freien phenolischen OH-Gruppen mit einem Alkylenoxid umgesetzt.

Neben den freien phenolischen OH-Gruppen können auch freie OH-Gruppen von Alkoholen oder NH-Gruppen von Aminen alkoxyliert werden, wie beispielsweise in US-5 401 439 offenbart wird.

Als weitere Erdölemulsionsspalter sind in US-4 321 146 Alkylenoxid-Blockcopolymere und in US-5 445 765 alkoxylierte Polyethylenimine offenbart. Die offenbarten Spalter können als einzelne Komponenten, in Mischungen mit anderen Emulsionsspaltern, oder auch als vernetzte Produkte eingesetzt werden.

Copolymerisate aus hydrophoben, endgruppenverschlossenen und z. T. vernetzten (Meth)acrylaten und hydrophilen Comonomeren als Emulsionsspalter sind in EP-0 264 841 offenbart.

Die unterschiedlichen Eigenschaften (z. B. Asphalten-, Paraffin- und Salzgehalt, chemische Zusammensetzung der natürlichen Emulgatoren) und Wasseranteile verschiedener Rohöle machen es unabdingbar, die bereits vorhandenen Erdölspalter weiter zu entwickeln. Insbesondere steht eine niedrige Dosierrate und breite Anwendbarkeit des einzusetzenden Erdölspalters neben der anzustrebenden höheren Effektivität aus ökonomischer und ökologischer Sicht im Vordergrund. Weiterhin werden zunehmend Emulsionsspalter benötigt, um die in die Diskussion geratenen Produkte auf Alkylphenolbasis zu ersetzen.

Es ergab sich somit die Aufgabe, neue Erdölspalter zu entwickeln, die den bereits bekannten Erdölspaltern auf Alkylphenolbasis in der Wirkung gleichwertig oder überlegen sind, und in noch niedrigeren Dosen eingesetzt werden können.

Es stellte sich überraschenderweise heraus, dass alkoxylierte (Meth)acrylatPolymere bereits bei sehr niedriger Dosierung eine ausgezeichnete Wirkung als Erdölspalter zeigen.

Gegenstand der Erfindung ist daher die Verwendung von Polymeren, enthaltend Struktureinheiten von Monomeren (A) nach Formel I 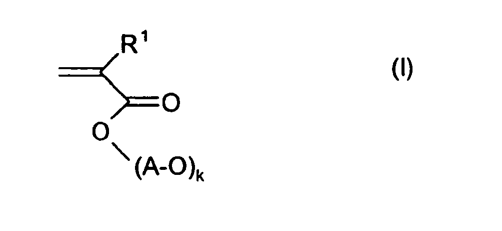 worin
- A: für eine C₂- bis C₄-Alkylengruppe,
- R¹: für Wasserstoff oder Methyl,
- k: für eine Zahl von 1 bis 1000 stehen,
zur Spaltung von Öl/Wasser-Emulsionen in Mengen von 0,0001 bis 5 Gew.-% bezogen auf den Ölgehalt der zu spaltenden Emulsion.

Weiterer Gegenstand der Erfindung ist die Verwendung von Polymeren, enthaltend unterschiedliche Struktureinheiten von Monomeren (A) und (B) nach den Formeln I und II
(A) 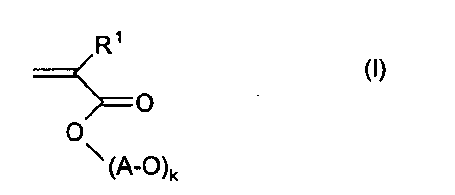 worin
   - A: für eine C₂- bis C₄-Alkylengruppe,
   - R¹: für Wasserstoff oder Methyl,
   - k: für eine Zahl von 1 bis 1000,
   und
(B) 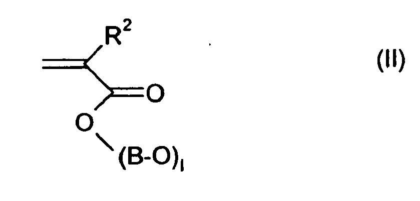 worin
   - B: für eine C₂- bis C₄-Alkylengruppe,
   - R²: für Wasserstoff oder Methyl,
   - I: für eine Zahl von 1 bis 1000 stehen,
   zur Spaltung von Öl/Wasser-Emulsionen in Mengen von 0,0001 bis 5 Gew.-% bezogen auf den Ölgehalt der zu spaltenden Emulsion.

Weiterer Gegenstand der Erfindung sind Polymere, enthaltend Struktureinheiten von Monomeren (A) nach Formel I 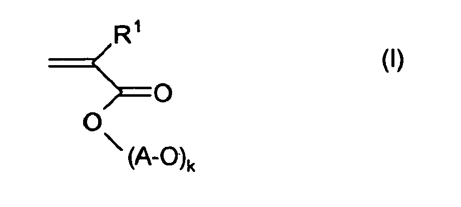 worin
- A: für eine C₂- bis C₄-Alkylengruppe,
- R¹: für Wasserstoff oder Methyl,
- k: für eine Zahl von 1 bis 1000 stehen,
zur Spaltung von Öl/Wasser-Emulsionen in Mengen von 0,0001 bis 5 Gew.-% bezogen auf den Ölgehalt der zu spaltenden Emulsion.

Weiterer Gegenstand der Erfindung sind Polymere, enthaltend unterschiedliche Struktureinheiten von Monomeren (A) und (B) nach den Formeln I und II
(A) 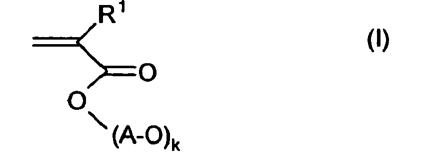 worin
   - A: für eine C₂- bis C₄-Alkylengruppe,
   - R¹: für Wasserstoff oder Methyl,
   - k: für eine Zahl von 1 bis 1000,
   und
(B) 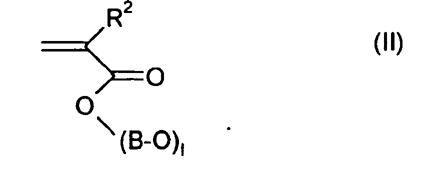 worin
   - B: für eine C₂- bis C₄-Alkylengruppe,
   - R²: für Wasserstoff oder Methyl,
   - I: für eine Zahl von 1 bis 1000 stehen,
   zur Spaltung von Öl/Wasser-Emulsionen in Mengen von 0,0001 bis 5 Gew.-% bezogen auf den Ölgehalt der zu spaltenden Emulsion.

Die im Folgenden beschriebenen bevorzugten Ausführungsformen der Erfindung beziehen sich stets sowohl auf die Polymere selbst als auch auf deren Verwendung. Dies gilt unabhängig davon, ob im Folgenden auf die Polymere oder deren Verwendung bezug genommen wird.

Der Begriff, dass die Polymere Struktureinheiten der Monomere (A) oder (A) und (B) enthalten bedeutet, dass die Polymere durch die Polymerisation der Monomere (A) und (B) erhältlich sind, wenn diese der radikalischen Polymerisation unterzogen werden.

Das erfindungsgemäße Polymer besitzt im Allgemeinen übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine beispielsweise schwefelhaltige Gruppe aus einem Kettenübertragungsreagenz.

Die erfindungsgemäß zu verwendenden Polymere können Homopolymere von Monomeren der Formel I oder Copolymere von Monomeren der Struktureinheiten I und II sein. In einer bevorzugten Ausführungsform addieren sich die Anteile der Struktureinheiten der Formel I und II zu 100 mol-%.

Handelt es sich bei den erfindungsgemäß zu verwendenden Polymeren um Homopolymere, so kann die Gruppe -(A-O)ₖ- eine einheitliche oder eine gemischte Alkoxygruppe sein. Ist sie eine gemischte Alkoxygruppe, so entspricht sie vorzugsweise der Formel -(A¹-O)ₙ-(A²-O)ₘ-,
worin
- n: eine Zahl von 1 bis 500
- m: eine Zahl von 1 bis 500
- A¹: eine C₂- bis C₄-Alkylengruppe
- A²: eine von A¹ verschiedene C₂- bis C₄-Alkylengruppe
bedeuten.

Vorzugsweise ist A¹ eine Propylen- und A² eine Ethylengruppe. Weiterhin vorzugsweise steht n für eine Zahl von 2 bis 50. Weiterhin vorzugsweise steht m für eine Zahl von 2 bis 50. Es ist ferner bevorzugt, dass n + m eine Zahl von 2 bis 80, insbesondere 4 bis 70 bedeutet. Die Abfolge der Alkoxygruppe A¹-O und A²-O kann statistisch oder blockweise sein.

Ist -(A-O)ₖ- eine einheitliche Alkoxygruppe, so steht A vorzugsweise für eine Propylengruppe. k steht vorzugsweise für eine Zahl von 2 bis 15, insbesondere 3 bis 10.

Handelt es sich bei dem erfindungsgemäß zu verwendenden Polymer um ein Copolymer, so unterscheiden sich die Monomere der Formeln I und II in einer oder mehreren Merkmalen. Unterscheidende Merkmale können die Bedeutungen von R¹ und R², von A und B oder von k und I sein. Die Monomere können sich auch in der Abfolge der Alkoxyeinheiten unterscheiden, die blockweise oder statistisch sein kann.

Handelt es sich bei den erfindungsgemäß zu verwendenden Polymeren um Copolymere, so können die Gruppen -(A-O)ₖ- und -(B-O)ₗ- einheitliche oder gemischte Alkoxygruppen sein. Sind sie gemischte Alkoxygruppen, so entsprechen sie vorzugsweise den Formeln -(A¹-O)ₙ-(A²-O)ₘ- und -(B¹-O)ₒ-(B²-O)ₚ-,
worin
- n: eine Zahl von 1 bis 500
- m: eine Zahl von 1 bis 500
- O: eine Zahl von 1 bis 500
- p: eine Zahl von 1 bis 500
- A¹: eine C₂- bis C₄-Alkylengruppe
- A²: eine von A¹ verschiedene C₂- bis C₄-Alkylengruppe
- B¹: eine C₂- bis C₄-Alkoxygruppe
- B²: eine von B¹ verschiedene C₂- bis C₄-Alkoxygruppe
bedeuten.

Vorzugsweise ist A¹ eine Propylen- und A² eine Ethylengruppe. Weiterhin vorzugsweise steht n für eine Zahl von 2 bis 50. Weiterhin vorzugsweise steht m für eine Zahl von 2 bis 50. Es ist ferner bevorzugt, dass n + m eine Zahl von 2 bis 80, insbesondere 4 bis 70 bedeutet.

Vorzugsweise ist B¹ eine Propylen- und B² eine Ethylengruppe. Weiterhin vorzugsweise steht o für eine Zahl von 2 bis 50. Weiterhin vorzugsweise steht m für eine Zahl von 2 bis 50. Es ist ferner bevorzugt, dass n + m eine Zahl von 2 bis 80, insbesondere 4 bis 70 bedeutet.

Stehen -(A-O)ₖ- und -(B-O)ₗ- für einheitliche Alkoxygruppen, so bedeutet A vorzugsweise eine Propylengruppe und B eine Ethylengruppe. k steht vorzugsweise für eine Zahl von 2 bis 15, insbesondere 3 bis 10. I steht vorzugsweise für eine Zahl von 2 bis 15, insbesondere 3 bis 10.

Stehen -(A-O)ₖ- und -(B-O)ₗ- für einheitliche Alkoxygruppen, so bedeutet A weiterhin vorzugsweise eine Propylengruppe und B eine Propylengruppe, wobei k und I unterschiedlich sind. k steht vorzugsweise für eine Zahl von 2 bis 15, insbesondere 3 bis 10. I steht für eine von k verschiedene Zahl, vorzugsweise für eine Zahl von 2 bis 15, insbesondere 3 bis 10.

In einer bevorzugten Ausführungsform 1 steht -(A-O)ₖ- für einen Block Ethylenoxideinheiten und -(B-O)- für einen Block Propylenoxideinheiten, wobei k und I unterschiedlich sind. k steht vorzugsweise für eine Zahl von 5 bis 80. I steht für eine von k verschiedene Zahl, vorzugsweise für eine Zahl von 5 bis 80.

In einer weiteren bevorzugten Ausführungsform 1 steht -(A-O)ₖ- für einen Block Propylenoxideinheiten und -(B-O)ₗ- für einen Block Propylenoxideinheiten. k steht vorzugsweise für eine Zahl von 5 bis 80. I steht vorzugsweise für eine Zahl von 5 bis 80.

Der molare Anteil der Monomere beträgt in der bevorzugten Ausführungsform 1 0,1 bis 99,9 % für das Monomer (A) und 0,1 bis 99,9 % für das Monomer (B), insbesondere 1 bis 95 % für das Monomer (A) und 5 bis 99 % für das Monomer (B), speziell 10 bis 90 % für das Monomer (A) und 10 bis 90 % für das Monomer (B).

In einer weiteren bevorzugten Ausführungsform (Ausführungsform 2) des Polymers aus den Monomeren (A) und (B) steht (A¹-O)ₘ für einen Block Propylenoxid-Einheiten und (A²-O)ₙ für einen Block Ethylenoxid-Einheiten, oder (A¹-O)ₘ für einen Block Ethylenoxid-Einheiten und (A²-O)ₙ für einen Block Propylenoxid-Einheiten, wobei der molare Anteil der Ethylenoxid-Einheiten bevorzugt 30 bis 98 %, insbesondere 50 bis 95 %, besonders bevorzugt 60 bis 93 %, bezogen auf die Summe (100 %) der Ethylenoxid- und Propylenoxid-Einheiten, beträgt. (B¹-O)ₒ und (B²-O)ₚ stehen für einen Block Ethylenoxid-Einheiten, oder bevorzugt für einen Block Propylenoxid-Einheiten.
- m: steht vorzugsweise für eine Zahl von 2 bis 50.
- n: steht vorzugsweise für eine Zahl von 2 bis 50.

Die Summe aus o und p steht vorzugsweise für eine Zahl von 2 bis 80.

Der molare Anteil der Monomere beträgt in der bevorzugten Ausführungsform 2 1 bis 99 % für das Monomer (A) und 1 bis 99 % für das Monomer (B), insbesondere 5 bis 95 % für das Monomer (A) und 5 bis 95 % für das Monomer (B), speziell 10 bis 90 % für das Monomer (A) und 10 bis 90 % für das Monomer (B). Die Monomere (A) und (B) ergänzen sich zu 100 mol-%.

Im Falle von unterschiedlichen Alkylenoxideinheiten (A¹-O)ₘ, (A²-O)ₘ, im Monomer (A) gemäß Ausführungsform 2 können diese entweder statistisch oder wie im Falle einer bevorzugten Ausführungsform blockartig angeordnet vorliegen.

In einer weiteren bevorzugten Ausführungsform (Ausführungsform 3) des Polymers aus den Monomeren (A) und (B) steht (A¹-O)ₘ für einen Block Propylenoxid-Einheiten und (A²-O)ₙ für einen Block Ethylenoxid-Einheiten, oder (A¹-O)ₘ für einen Block Ethylenoxid-Einheiten und (A²-O)ₙ für einen Block Propylenoxid-Einheiten, wobei der molare Anteil der Ethylenoxid-Einheiten bevorzugt 30 bis 98 %, insbesondere 50 bis 95 %, besonders bevorzugt 60 bis 93 %, bezogen auf die Summe (100 %) der Ethylenoxid- und Propylenoxid-Einheiten, und (B¹-O)ₒ für einen Block Propylenoxid-Einheiten und (B²-O)ₚ für einen Block Ethylenoxid-Einheiten, oder (B¹-O)ₒ für einen Block Ethylenoxid-Einheiten und (B²-O)ₚ für einen Block Propylenoxid-Einheiten, wobei der molare Anteil der Ethylenoxid-Einheiten bevorzugt 30 bis 98 %, insbesondere 50 bis 95 %, besonders bevorzugt 60 bis 93 %, bezogen auf die Summe (100 %) der Ethylenoxid- und Propylenoxid-Einheiten beträgt.

Der molare Anteil der Monomere beträgt in der bevorzugten Ausführungsform 3 1 bis 99 % für das Monomer (A) und 1 bis 99 % für das Monomer (B), insbesondere 5 bis 95 % für das Monomer (A) und 5 bis 95 % für das Monomer (B), speziell 10 bis 90 % für das Monomer (A) und 10 bis 90 % für das Monomer (B). Die Monomere (A) und (B) ergänzen sich zu 100 mol-%
- m: steht vorzugsweise für eine Zahl von 2 bis 50.
- n: steht vorzugsweise für eine Zahl von 2 bis 50.
- o: steht vorzugsweise für eine Zahl von 2 bis 50.
- p: steht vorzugsweise für eine Zahl von 2 bis 50

Die Zahl der Alkylenoxideinheiten (n + m) beträgt bevorzugt 2 bis 500, insbesondere 4 bis 100, besonders bevorzugt 5 bis 80.

Die Zahl der Alkylenoxideinheiten (o + p) beträgt bevorzugt 2 bis 500, insbesondere 4 bis 100, besonders bevorzugt 5 bis 80.

Im Falle von unterschiedlichen Alkylenoxideinheiten (A¹-O)ₘ, (A²-O)ₙ, im Monomer (A) gemäß Ausführungsform 3 können diese entweder statistisch oder wie im Falle einer bevorzugten Ausführungsform blockartig angeordnet vorliegen.

Im Falle von unterschiedlichen Alkylenoxideinheiten (B¹-O)ₒ, (B²-O)ₚ im Monomer (B) gemäß Ausführungsform 3 können diese entweder statistisch oder wie im Falle einer bevorzugten Ausführungsform blockartig angeordnet vorliegen.

Die erfindungsgemäßen Polymere besitzen ein zahlenmittleres Molekulargewicht von vorzugsweise 10³ g/mol bis 10⁹ g/mol, besonders bevorzugt von 10³ bis 10⁷ g/mol, insbesondere 10³ bis 10⁶ g/mol.

Die Herstellung der erfindungsgemäßen Polymere kann mittels radikalischer Polymerisation erfolgen. Die Polymerisationsreaktion kann kontinuierlich, diskontinuierlich oder semi-kontinuierlich durchgeführt werden.

Die Polymerisationsreaktion wird vorzugsweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Polymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, Isopropanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykolmonoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Polymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180°C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropylhydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z. B. Tetrachlorkohlenstoff, Chloroform und Methylenchlorid.

Ein bevorzugter Gegenstand vorliegender Erfindung ist die Verwendung der alkoxylierten (Meth)acrylat-Polymere als Spalter für Öl/Wasser-Emulsionen in der Erdölförderung.

Zur Verwendung als Erdölspalter werden die alkoxylierten (Meth)acrylat-Polymere dem Wasser in Öl-Emulsionen zugesetzt, was vorzugsweise in Lösung geschieht. Als Lösungsmittel für die alkoxylierten (Meth)acrylat-Polymere werden alkoholische Lösungsmittel bevorzugt. Die alkoxylierten (Meth)acrylat-Polymere werden in Mengen von 0,0001 bis 5, vorzugsweise 0,0005 bis 2, insbesondere 0,0008 bis 1 und speziell 0,001 bis 0,1 Gew.-% bezogen auf den Ölgehalt der zu spaltenden Emulsion verwendet.

### Beispiele

### Allgemeine Polymerisationsvorschrift (Homopolymer aus Monomer A)

In einem Kolben mit Rührer, Rückflusskühler, Innenthermometer und Stickstoffeinleitung wurde das Monomer A und ggf. der Molekulargewichtsregler in Lösungsmittel unter Stickstoffeinleitung vorgelegt. Dann wurde die Temperatur unter Rühren auf 80°C gebracht und innerhalb einer Stunde eine Lösung des Initiators zudosiert. Im Anschluss wurde noch für 5 Stunden bei dieser Temperatur weitergerührt. Die Molmasse des Polymers wurde über GPC (Referenz: Polyethylenglykol) analysiert. Die Ausbeute beträgt > 95%.

### Allgemeine Polymerisationsvorschrift (Polymer aus Monomer A und B)

In einem Kolben mit Rührer, Rückflusskühler, Innenthermometer und Stickstoffeinleitung wurde das Monomer A, Monomer B und ggf. der Molekulargewichtsregler in Lösungsmittel unter Stickstoffeinleitung vorgelegt. Dann wurde die Temperatur unter Rühren auf 80°C gebracht und innerhalb einer Stunde eine Lösung des Initiators zudosiert. Im Anschluss wurde noch für 5 Stunden bei dieser Temperatur weitergerührt. Die Molmasse des Polymers wurde über GPC (Referenz: Polyethylenglykol) analysiert. Die Ausbeute beträgt > 95 %.

Die folgenden Tabellen enthalten Synthesebeispiele, bei denen die Polymere nach der allgemeinen Synthesevorschrift hergestellt wurde.

**Tabelle 1**

| Beispiele für Homopolymere: | |
|---|---|
| Beispiel | Gew.-% Monomer A (MW) |
| 1 | 50 (350) |
| 2 | 50 (750) |
| 3 | 50 (1000) |

| | |
|---|---|
| Monomer (A): -(A¹-O)ₖ - = Propenyloxy MW = Durchschnittliches Molekulargewicht Regler = Dodecanthiol | |

**Tabelle 2**

| Beispiele für Polymere gemäß der Ausführungsform 1: | | |
|---|---|---|
| Beispiel | Gew.-% Monomer A (MW) | Gew.-% Monomer B (MW) |
| 4 | 50 (350) | 50 (750) |
| 5 | 50 (350) | 50 (1000) |
| 6 | 50 (750) | 50 (1000) |
| 7 | 50 (1000) | 50 (2000) |

| | | |
|---|---|---|
| Monomer (A): (A¹-O)ₘ = (A²-O)ₙ = Propenyloxy Monomer (B): (B¹-O)ₒ = (B²-O)ₚ = Propenyloxy MW = Durchschnittliches Molekulargewicht Regler = Dodecanthiol | | |

**Tabelle 3**

| Beispiel für Polymere gemäß der Ausführungsform 2: | | | | |
|---|---|---|---|---|
| Beispiel | m | n | Gew.-% Monomer A | Gew.-% Monomer B |
| | | | (MW) | (MW) |
| 8 | 2 | 3 | 10 (350) | 90 (350) |
| 9 | 2 | 3 | 30 (350) | 70 (350) |
| 10 | 2 | 3 | 50 (350) | 50 (350) |
| 11 | 2 | 3 | 70 (350) | 30 (350) |
| 12 | 2 | 3 | 90 (350) | 10 (350) |
| 13 | 2 | 3 | 10 (350) | 90 (750) |
| 14 | 2 | 3 | 30 (350) | 70 (750) |
| 15 | 2 | 3 | 50 (350) | 50 (750) |
| 16 | 2 | 3 | 70 (350) | 30 (750) |
| 17 | 2 | 3 | 90 (350) | 10 (750) |
| 18 | 2 | 3 | 10 (350) | 90 (1000) |
| 19 | 2 | 3 | 30 (350) | 70 (1000) |
| 20 | 2 | 3 | 50 (350) | 50 (1000) |
| 21 | 2 | 3 | 70 (350) | 30 (1000) |
| 22 | 2 | 3 | 90 (350) | 10 (1000) |
| 23 | 2 | 3 | 10 (350) | 90 (2000) |
| 24 | 2 | 3 | 30 (350) | 70 (2000) |
| 25 | 2 | 3 | 50 (350) | 50 (2000) |
| 26 | 2 | 3 | 70 (350) | 30 (2000) |
| 27 | 2 | 3 | 90 (350) | 10 (2000) |
| 28 | 2 | 13 | 10 (750) | 90 (2000) |
| 29 | 2 | 13 | 30 (750) | 70 (2000) |
| 30 | 2 | 13 | 50 (750) | 50 (2000) |
| 31 | 2 | 13 | 70 (750) | 30 (2000) |
| 32 | 2 | 13 | 90 (750) | 10 (2000) |
| 33 | 5 | 9 | 10 (750) | 90 (2000) |
| 34 | 5 | 9 | 30 (750) | 70 (2000) |
| 35 | 5 | 9 | 50 (750) | 50 (2000) |
| 36 | 5 | 9 | 70 (750) | 30 (2000) |
| 37 | 5 | 9 | 90 (750) | 10 (2000) |

| | | | | |
|---|---|---|---|---|
| m = durchschnittliche Anzahl Monomereinheiten (A¹-O)ₘ n = durchschnittliche Anzahl Monomereinheiten (A²-O)ₙ Monomer (A): (A¹-O)ₘ = Propenyloxy, (A²-O)ₙ = Ethenyloxy Monomer (B): (B¹-O)ₒ = (B²-O)ₚ = Propenyloxy MW = Durchschnittliches Molekulargewicht Regler = Dodecanthiol | | | | |

**Tabelle 4**

| Beispiele für Polymere gemäß der Ausführungsform 3: | | | | | | |
|---|---|---|---|---|---|---|
| Beispiel | m | n | o | p | Gew.-% Monomer A | Gew.-% Monomer B |
| | | | | | (MW) | (MW) |
| 38 | 2 | 3 | 2 | 13 | 30 (350) | 70 (750) |
| 39 | 2 | 3 | 2 | 13 | 50 (350) | 50 (750) |
| 40 | 2 | 3 | 2 | 13 | 70 (350) | 30 (750) |
| 41 | 2 | 3 | 5 | 9 | 30 (350) | 70 (750) |
| 42 | 2 | 3 | 5 | 9 | 50 (350) | 50 (750) |
| 43 | 2 | 3 | 5 | 9 | 70 (350) | 30 (750) |
| 44 | 5 | 9 | 2 | 13 | 30 (750) | 70 (750) |
| 45 | 5 | 9 | 2 | 13 | 50 (750) | 50 (750) |
| 46 | 5 | 9 | 2 | 13 | 70 (750) | 30 (750) |

| | | | | | | |
|---|---|---|---|---|---|---|
| m = durchschnittliche Anzahl Monomereinheiten (A¹-O)ₘ n = durchschnittliche Anzahl Monomereinheiten (A²-O)ₙ o = durchschnittliche Anzahl Monomereinheiten (B¹-O)ₒ p = durchschnittliche Anzahl Monomereinheiten (B²-O)ₚ Monomer (A): (A¹-O)ₘ = Propenyloxy, (A²-O)ₙ = Ethenyloxy Monomer (B): (B¹-O)ₒ = Propenyloxy, (B²-O)ₚ = Ethenyloxy MW = Durchschnittliches Molekulargewicht Regler = Dodecanthiol | | | | | | |

### Bestimmung der Spaltwirksamkeit von Erdölemulsionsspaltern

Zur Bestimmung der Wirksamkeit eines Emulsionsspalters wurde die Wasserabscheidung aus einer Rohölemulsion pro Zeit sowie die Entwässerung des Öls bestimmt. Dazu wurden in Spaltergläser (konisch zulaufende, verschraubbare, graduierte Glasflaschen) jeweils 100 ml der Rohölemulsion eingefüllt, jeweils eine definierte Menge des Emulsionsspalters mit einer Mikropipette knapp unter die Oberfläche der Ölemulsion zudosiert und der Spalter durch intensives Schütteln in die Emulsion eingemischt. Danach wurden die Spaltergläser in ein Temperierbad (50°C) gestellt und die Wasserabscheidung verfolgt.

Nach beendeter Emulsionsspaltung wurden Proben von dem Öl aus dem oberen Teil des Spalterglases (sog. Topöl) entnommen und deren Wassergehalt nach Karl Fischer bestimmt. Auf diese Weise konnten die neuen Spalter nach Wasserabscheidung sowie Entwässerung des Öls beurteilt werden.

### Spaltwirkung der beschriebenen Spalter

Ursprung der Rohölemulsion: Hebertshausen, Deutschland
Wassergehalt der Emulsion: 48 %
Demulgiertemperatur: 50 °C

Die Wirksamkeit der alkoxylierten (Meth)acrylat-Polymere als Emulsionsspalter im Vergleich zu Dissolvan^{®} V 5022-1 c. (ein Polyaminalkoxylat) bei unterschiedlichen Dosierraten wird in den folgenden Tabellen dargestellt.

**Tabelle 5**

| Wirksamkeit als Spalter | | | | | | | | | |
|---|---|---|---|---|---|---|---|---|---|
| Beispiel | Polymer aus: | | Zeit [min] | | | | | | Wasser im Topöl [%] |
| | Beispiel | Dosierrate [ppm] | 10 | 20 | 30 | 45 | 60 | 120 | |
| 47 | 2 | 40 | 5 | 22 | 25 | 30 | 30 | 39 | 0,5 |
| 48 | 3 | 40 | 0 | 0 | 2 | 9 | 20 | 28 | 1 |
| 49 | 13 | 40 | 8 | 20 | 24 | 28 | 30 | 36 | 1 |
| 50 | 15 | 40 | 1 | 19 | 30 | 34 | 35 | 38 | 1 |
| 51 | 17 | 40 | 0 | 0 | 0 | 4 | 12 | 32 | 0 |
| 52 | 18 | 40 | 3 | 20 | 22 | 26 | 30 | 32 | 0 |
| 53 | 19 | 40 | 15 | 20 | 24 | 30 | 32 | 32 | 1 |
| 54 | 20 | 40 | 1 | 10 | 25 | 32 | 32 | 36 | 1 |
| 55 | 38 | 40 | 0 | 2 | 8 | 18 | 29 | 35 | 0 |
| 56 | 41 | 40 | 0 | 0 | 5 | 11 | 18 | 33 | 0,5 |
| 57 (V) | Dissolvan V 5022-1c. | 40 | 0 | 0 | 4 | 11 | 19 | 30 | 0 |

**Tabelle 6**

| Wirksamkeit als Spalter | | | | | | | | | |
|---|---|---|---|---|---|---|---|---|---|
| Beispiel | Polymer aus: | | Zeit [min] | | | | | | Wasser im Topöl [%] |
| | Beispiel | Dosierrate [ppm] | 10 | 20 | 30 | 45 | 60 | 120 | |
| 58 | 1 | 125 | 0 | 3 | 20 | 27 | 30 | 40 | 5 |
| 59 | 8 | 125 | 0 | 1 | 2 | 11 | 20 | 34 | 6 |
| 60 | 9 | 125 | 0 | 0,5 | 1 | 2,5 | 5 | 26 | 7 |
| 61 | 10 | 125 | 0 | 0 | 0 | 1 | 2 | 7 | 0 |
| 62 (V) | Dissolvan V 5022-1c. | 125 | 0 | 3 | 4 | 5 | 7 | 15 | 0 |

## Patentansprüche

1. Verwendung von Homopolymeren aus Struktureinheiten der Monomere (A) nach Formel I 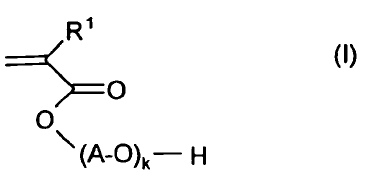 worin
A für eine C₂- bis C₄-Alkylengruppe,
R¹ für Wasserstoff oder Methyl,
k für eine Zahl von 1 bis 1000 stehen,
zur Spaltung von Öl/Wasser-Emulsionen in Mengen von 0,0001 bis 5 Gew.-% bezogen auf den Ölgehalt der zu spaltenden Emulsion.

2. Verwendung nach Anspruch 1, worin die Gruppe -(A-O)ₖ- eine gemischte Alkoxygruppe der Formel -(A¹-O)ₘ-(A²-O)ₙ- ist,
worin
n eine Zahl von 1 bis 500
m eine Zahl von 1 bis 500
A¹ eine C₂- bis C₄-Alkylengruppe
A² eine von A¹ verschiedene C₂- bis C₄-Alkylengruppe
bedeuten.

3. Verwendung nach Anspruch 1, worin A für eine Propylengruppe steht.

4. Verwendung nach Anspruch 2, worin (n + m) für eine Zahl von 2 bis 80 steht.

5. Verwendung nach einem oder mehreren der Ansprüche 1 bis 4, worin das zahlenmittlere Molekulargewicht der Polymere 10³ bis 10⁹ g/mol beträgt.

6. Verwendung nach einem oder mehreren der Ansprüche 2 bis 5, worin die Alkoxygruppen blockweise angeordnet sind.

7. Verwendung gemäß einem oder mehreren der Ansprüche 4 bis 6, wobei (A¹-O)ₘ für einen Block Propylenoxid-Einheiten und (A²-O)ₙ für einen Block Ethylenoxid-Einheiten, oder (A¹-O)ₘ für einen Block Ethylenoxid-Einheiten und (A²-O)ₙ für einen Block Propylenoxid-Einheiten stehen, und wobei der molare Anteil der Ethylenoxid-Einheiten, bezogen auf die Summe der Ethylenoxid- und Propylenoxid-Einheiten, 30 bis 98 % beträgt.

## Claims

1. The use of homopolymers consisting of structural units of monomers (A) according to formula I 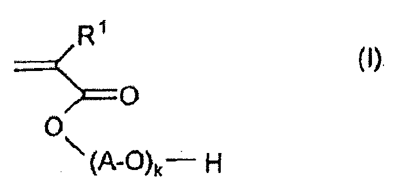 where
A is a C₂ to C₄ alkylene group,
R¹ is hydrogen or methyl,
k is from 1 to 1000,
for breaking oil/water emulsions in amounts of 0.0001% to 5% by weight based on the oil content of the emulsion to be broken.

2. The use according to claim 1 wherein the group -(A-O)ₖ- is a mixed alkoxy group of the formula -(A¹-O)ₘ-(A²-O)ₙ-,
where
n is from 1 to 500,
m is from 1 to 500,
A¹ is a C₂ to C₄ alkylene group, and
A² is a C₂ to C₄ alkylene group other than A¹.

3. The use according to claim 1 wherein A is a propylene group.

4. The use according to claim 2 wherein (n + m) is from 2 to 80.

5. The use according to one or more of claims 1 to 4 wherein the number average molecular weight of the polymers is from 10³ to 10⁹ g/mol.

6. The use according to one or more of claims 2 to 5 wherein the alkoxy groups are arranged blockwise.

7. The use according to one or more of claims 4 to 6 wherein (A¹-O)ₘ is a block of propylene oxide units and (A²-O)ₙ is a block of ethylene oxide units, or (A¹-O)ₘ is a block of ethylene oxide units and (A²-O)ₙ is a block of propylene oxide units, and wherein the molar fraction of ethylene oxide units, based on the sum total of ethylene oxide and propylene oxide units, is from 30 to 98%.

## Revendications

1. Utilisation d'homopolymères constitués d'unités structurales des monomères (A) de formule I 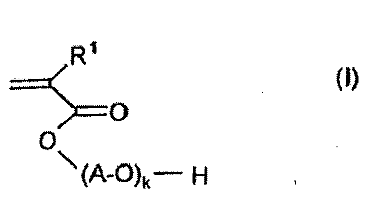 dans laquelle
A représente un groupe alkylène en C₂ à C₄,
R¹ représente hydrogène ou méthyle,
k représente un nombre de 1 à 1 000,
pour la séparation d'émulsions huile/eau en quantités de 0,0001 à 5 % en poids, par rapport à la teneur en huile de l'émulsion à séparer.

2. Utilisation selon la revendication 1, dans laquelle le groupe -(A-O)ₖ- est un groupe alcoxy mixte de formule -(A¹-O)ₘ-(A²-O)ₙ-,
dans laquelle
n signifie un nombre de 1 à 500,
m signifie un nombre de 1 à 500,
A¹ signifie un groupe alkylène en C₂ à C₄,
A² signifie un groupe alkylène en C₂ à C₄ différent de A¹.

3. Utilisation selon la revendication 1, dans laquelle A représente un groupe propylène.

4. Utilisation selon la revendication 2, dans laquelle (n+m) représente un nombre de 2 à 80.

5. Utilisation selon une ou plusieurs des revendications 1 à 4, dans laquelle le poids moléculaire moyen en nombre des polymères est de 10³ à 10⁹ g/mol.

6. Utilisation selon une ou plusieurs des revendications 2 à 5, dans laquelle les groupes alcoxy sont agencés en séquences.

7. Utilisation selon une ou plusieurs des revendications 4 à 6, dans laquelle (A¹-O)ₘ représente une séquence d'unités oxyde de propylène et (A²-O)ₙ représente une séquence d'unités oxyde d'éthylène, ou (A¹-O)ₘ représente une séquence d'unités oxyde d'éthylène et (A²-O)ₙ représente une séquence d'unités oxyde de propylène, la proportion molaire des unités oxyde d'éthylène, par rapport à la somme des unités oxyde d'éthylène et oxyde de propylène, étant de 30 à 98 %.
